# EUROPEAN PATENT APPLICATION

(11) **EP 4 651 586 A1**
(43) Date of publication of application: **19.11.2025**
(21) Application number: 23915288.7
(22) Date of filing: 10.01.2023
(51) Int. Cl.: H04W 64/00

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: QI, Yinan, Dongguan, Guangdong 523860 (CN)
(74) Representative: Novagraaf Technologies
(86) International application number: PCT/CN2023/071599
(87) International publication number: WO 2024/148511

(57) **Abstract**

A wireless communication method and a device. The method comprises: a first terminal receives a first-type positioning reference signal (PRS) and a second-type PRS, wherein the first-type PRS is sent by a first-type device in an active transmission manner, the second-type PRS is sent by a second-type device in a backscatter manner, and the first-type PRS and the second-type PRS are used for determining position information of the first terminal.

## Description

### TECHNICAL FIELD

Embodiments of the present disclosure relate to the field of communications, and in particular, relate to a method and device for wireless communication.

### RELATED ART

In some scenarios, positioning using ambient power (AMP) devices is considered. However, in actual deployments, capabilities of the AMP devices may differ, or various types of AMP devices may be actually deployed. In this case, how to achieve accurate positioning using these diverse AMP devices is a significant challenge that needs to be urgently addressed.

### SUMMARY

Embodiments of the present disclosure provide a method and device for wireless communication, which is appliable to positioning based on an actively transmitted positioning reference signal (PRS) and a backscattered PRS, and is conducive to low-cost and high-accuracy positioning.

In a first aspect, a method for wireless communication is provided. The method is performed by a first terminal, and includes: receiving a first-type PRS and a second-type PRS, wherein the first-type PRS is transmitted by a first-type device using an active transmission mode, the second-type PRS is transmitted by a second-type device using a backscatter mode, and the first-type PRS and the second-type PRS are used to determine position information of the first terminal.

In a second aspect, a method for wireless communication is provided. The method is performed by a second-type device, and includes: transmitting a second-type PRS to a first terminal, wherein the second-type PRS is transmitted by the second-type device using a backscatter mode, and the second-type PRS is used to determine position information of the first terminal.

In a third aspect, a method for wireless communication is provided. The method is performed by a first-type device, and includes: transmitting a first-type PRS to a first terminal, wherein the first-type PRS is transmitted by the first-type device using an active transmission mode, and the first-type PRS is used to determine position information of the first terminal.

In a fourth aspect, a method for wireless communication is provided. The method is performed by a third device, and includes: receiving a fourth-type PRS and a fifth-type PRS, wherein the fourth-type PRS is transmitted by a first terminal using an active transmission mode, the fifth-type PRS is transmitted by a second-type device using a backscatter mode, and the fourth-type PRS and the fifth-type PRS are used to determine position information of the first terminal.

In a fifth aspect, a method for wireless communication is provided. The method is performed by a first terminal, and includes: transmitting a fourth-type PRS to a third device, wherein the fourth-type PRS is transmitted using an active transmission mode, and the fourth-type PRS is used to determine position information of the first terminal.

In a sixth aspect, a method for wireless communication is provided. The method is performed by a second-type device, and includes: transmitting a fifth-type PRS to a third device, wherein the fifth-type PRS is transmitted using a backscatter mode, and the fifth-type PRS are used to determine position information of a first terminal.

In a third aspect, a terminal device is provided. The terminal device is applicable to implementing the method in the first aspect or embodiments thereof.

Specifically, the terminal device includes functional modules for performing the method in the first aspect or embodiments thereof.

In a fourth aspect, a network device is provided. The network device is applicable to implementing the method in the second aspect or embodiments thereof.

Specifically, the network device includes functional modules for performing the method in the second aspect or embodiments thereof.

In a fifth aspect, a terminal device is provided. The terminal device includes a processor and a memory storing one or more computer programs; wherein the processor is configured to call and run the one or more computer programs in the memory to perform the method in the first aspect or embodiments thereof.

In a sixth aspect, a network device is provided. The network device includes a processor and a memory storing one or more computer programs; wherein the processor is configured to call and run the one or more computer programs in the memory to perform the method in the second aspect or embodiments thereof.

In a seventh aspect, a chip is provided. The chip is applicable to implementing the method in the first aspect to the second aspect or embodiments thereof.

Specifically, the chip includes a processor, wherein the processor is configured to call and run one or more computer programs in a memory to cause a device equipped with the chip to perform the method in the first aspect to the second aspect or embodiments thereof.

In an eighth aspect, a computer-readable storage medium is provided. The computer-readable storage medium stores one or more computer programs, wherein the one or more computer programs, when loaded and run on a computer, cause the computer to perform the method in the first aspect to the second aspect or embodiments thereof.

In a ninth aspect, a computer program product is provided. The computer program product includes one or more computer program instructions, wherein the one or more computer program instructions, when loaded and executed on a computer, cause the computer to perform the method in the first aspect to the second aspect or embodiments thereof.

In a tenth aspect, a computer program is provided. The computer program, when loaded and run on a computer, causes the computer to perform the method in the first aspect to the second aspect or embodiments thereof.

Based on the above technical solutions, the to-be-positioned terminal is positioned, or other positioning entities (that is, the third device) are positioned based on the actively transmitted PRS and the backscattered PRS. The backscattered PRS is transmitted by a backscatter AMP device. Due to low cost and maintenance-free of the backscatter AMP device, positioning based on the actively transmitted PRS and the backscattered PRS is low-cost and high-accuracy.

### BRIEF DESCRIPTION OF DRAWINGS

FIG. 1 is a schematic diagram of an architecture of a communication system according to some embodiments of the present disclosure;
FIG. 2 is a schematic diagram of a zero-power communication system according to some embodiments of the present disclosure;
FIG. 3 is a principle diagram of energy harvesting according to some embodiments of the present disclosure;
FIG. 4 is a principle diagram of backscattering communication according to some embodiments of the present disclosure;
FIG. 5 is a principle diagram of a resistance load modulation circuit according to some embodiments of the present disclosure;
FIG. 6 is a schematic diagram of a method for wireless communication according to some embodiments of the present disclosure;
FIG. 7 is a schematic interaction diagram of a positioning case according to some embodiments of the present disclosure;
FIG. 8 is a timing relationship diagram of signals in FIG. 7;
FIG. 9 is a timing relationship diagram of signals in FIG. 7;
FIG. 10 is a timing relationship diagram of signals in FIG. 7;
FIG. 11 is a schematic interaction diagram of a positioning case according to some embodiments of the present disclosure;
FIG. 12 is a schematic diagram of a method for wireless communication according to some embodiments of the present disclosure;
FIG. 13 is a schematic interaction diagram of a positioning case according to some embodiments of the present disclosure;
FIG. 14 is a schematic block diagram of a communication device according to some embodiments of the present disclosure;
FIG. 15 is a schematic block diagram of a communication device according to some embodiments of the present disclosure;
FIG. 16 is a schematic block diagram of a communication device according to some embodiments of the present disclosure;
FIG. 17 is a schematic block diagram of a communication device according to some embodiments of the present disclosure;
FIG. 18 is a schematic block diagram of a communication device according to some embodiments of the present disclosure;
FIG. 19 is a schematic block diagram of a communication device according to some embodiments of the present disclosure;
FIG. 20 is a schematic block diagram of a communication device according to some embodiments of the present disclosure;
FIG. 21 is a schematic block diagram of a chip according to some embodiments of the present disclosure; and
FIG. 22 is a schematic block diagram of a communication system according to some embodiments of the present disclosure.

### DETAILED DESCRIPTION

The technical solutions according to the embodiments of the present disclosure are described hereinafter in combination with the accompanying drawings for the embodiments of the present disclosure. It is obvious that the described embodiments are merely part but not all of the embodiments of the present disclosure. All other embodiments derived by persons of ordinary skill in the art without creative efforts based on the embodiments in the present disclosure are within the protection scope of the disclosure.

The technical solutions according to the embodiments of the present disclosure are applicable to various communication systems, such as a global system of mobile communication (GSM), a code-division multiple access (CDMA) system, a wideband code-division multiple access (WCDMA) system, a general packet radio service (GPRS) system, a long-term evolution (LTE) system, an advanced long-term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, an universal mobile telecommunication system (UMTS), a wireless local area network (WLAN), a wireless fidelity (Wi-Fi), a 5^{th} generation (5G) communication system, a cellular Internet of things system, a cellular passive Internet of things system, or other communication systems.

In general, the traditional communication systems support a limited number of connections and is relatively easy to implement. However, with the development of the communication technologies, the mobile communication systems not only support traditional communications, but also support, for example, device-to-device (D2D) communications, machine-to-machine (M2M) communications, machine-type communications (MTC), vehicle-to-vehicle (V2V) communications, vehicle-to-everything (V2X) communications, and the like. The embodiments of the present disclosure are also applicable to such communication systems.

In some embodiments, the communication systems according to the embodiments of the present disclosure are also applicable to a carrier aggregation (CA) scenario, a dual connectivity (DC) scenario, or a standalone (SA) scenario.

In some embodiments, the communication systems according to the embodiments of the present disclosure are also applicable to an unlicensed spectrum. The unlicensed spectrum may also be considered as a shared spectrum. Alternatively, the communication systems according to the embodiments of the present disclosure are also applicable to a licensed spectrum. The licensed spectrum may also be considered as a non-shared spectrum.

Various embodiments are described in conjunction with a network device and a terminal device in the embodiments of the present disclosure. The terminal device is also referred to as a user equipment (UE), an access terminal, a subscriber unit, a subscriber station, a rover station, a mobile station, a remote station, a remote terminal, a mobile device, a user terminal, a terminal, a wireless communication device, a user agent, a user apparatus, or the like.

In the embodiments of the present disclosure, the network device is a device for communicating with the mobile device, and the network device is an access point (AP) in WLAN, a base transceiver station (BTS) in GSM or CDMA, a NodeB (NB) in WCDMA, an evolved NodeB (eNB or eNodeB) in LTE, a relay station or an AP, an in-vehicle device, a wearable device, or a network device in an NR network (gNB), in cellular Internet of things, in cellular passive Internet of things, in a future evolutional PLMN network, or in an NTN network.

By way of example by not limitation, the network device has mobility in the embodiments of the present disclosure. For example, the network device is a mobile device. In some embodiments, the network device is a satellite or a balloon station. For example, the satellite is a low Earth orbit (LEO) satellite, a medium Earth orbit (MEO) satellite, a geostationary Earth orbit (GEO) satellite, a high elliptical orbit (HEO) satellite, or the like. In some embodiments, the network device is also an NB located on land, water, or the like.

In the embodiments of the present disclosure, the network device provides services for cells, and the terminal device communicates with the network device over the transmission resources (such as frequency domain resources, or spectrum resources) used in the cells. The cell corresponds to the network device (such as the NB), and the cell belongs to a macro NB or an NB corresponding to a small cell. The small cell includes a metro cell, a micro cell, a pico cell, a femto cell, or the like. The small cells have small coverage and low transmit power, and are suitable for providing highspeed data transmission services.

The terminal device may be a station (STA) in the WLAN, for example, a cellular phone, a cordless phone, a Session Initiation Protocol (SIP) phone, a wireless local loop (WLL) ST, a personal digital assistant (PDA) device, a handheld device with a wireless communication capability, a computing device or other processing devices connected to a wireless modem, an in-vehicle device, a wearable device, a terminal device in a next generation communication system (such as the NR network), a terminal device in an evolved public land mobile network (PLMN) network, a terminal device in cellular Internet of things, a terminal device in cellular passive Internet of things, or the like.

In the embodiments of the present disclosure, the terminal device is deployed on land (for example, indoors or outdoors, or handheld, wearable, or vehicle-mounted deployment); or the terminal device may be deployed on water (for example, on a ship); or the terminal device may be deployed in air (for example, on an aircraft, a balloon, or a satellite).

In the embodiments of the present disclosure, the terminal device is a mobile phone, a pad, a computer with a radio transceiver function, a virtual reality (VR) terminal device, an augmented reality (AR) terminal device, a wireless terminal device in industrial control, a wireless terminal device in self-driving, a wireless terminal device in remote medical, a wireless terminal in smart grid, a wireless terminal in transportation safety, a wireless terminal in smart city, or a wireless terminal device in smart home.

By way of example by not limitation, in the embodiments of the present disclosure, the terminal device may be a wearable device. The wearable device may also be referred to as a wearable smart device, which is a generic name for wearable devices such as glasses, gloves, watches, clothes, and shoes that are developed by applying wearable technologies for smart designs of daily wearables. The wearable device is a portable device that is directly worn on a body or integrated into clothing or an accessory of a user. The wearable device is not only a hardware device, but also implements powerful functions by software support, data exchange, and cloud interaction. In a broad sense, the wearable smart device includes a full-functionality and large-size device capable of implementing all or part of functions without relying on a smart phone, for example, a smart watch or smart glasses; and includes a device specializing in specific application functions and needs to be used with another device such as a smart phone, for example, various smart bracelets or smart jewelry for vital sign monitoring.

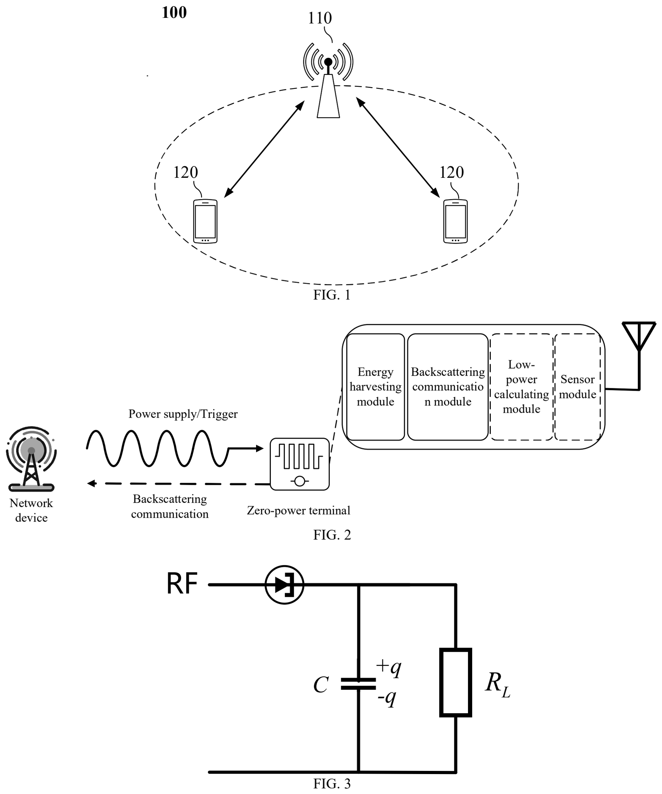

Exemplarily, the communication system 100 according to the embodiments of the present disclosure is illustrated in FIG. 1. The communication system 100 includes a network device 110. The network device 110 is a device capable of communicating with a terminal device 120 (also referred to as a communication terminal or a terminal). The network device 110 provides communication coverage for a specific geographical area, and is capable of communicating with the terminal device in the coverage area.

FIG. 1 illustrates one network device and two terminal devices. In some embodiments, the communication system 100 may include a plurality of network devices, and another quantity of terminal devices may be deployed within the coverage each of the network devices, which is not limited in the embodiments of the present disclosure.

In some embodiments, the communication system 100 may further include another network entity such as a network controller, a mobile management entity, or the like, which is not limited in the embodiments of the present disclosure.

It should be understood that devices with the communication function in the network/system in the embodiments of the present disclosure are referred to as the communication devices. Using the communication system 100 illustrated in FIG. 1 as an example, the communication device includes the network device 110 and the terminal device 120 that have the communication function, and the network device 110 and the terminal device 120 are specific devices as described above, which are not repeated herein. The communication device may further include another device in the communication system 100, for example, a network controller, a mobile management entity, or the like, which is not limited in the embodiments of the present disclosure.

It should be understood that the terms "system" and "network" herein are interchangeably used herein. The term "and/or" herein merely indicates an association relationship describing associated objects, that is, three types of relationships. For example, the phrase "A and/or B" indicates (A), (B), or (A and B). In addition, the character "/" generally indicates an "or" relationship between the associated objects.

It should be understood that the term "indicate" in the embodiments of the present disclosure means the direct indication, indirect indication, or an associated relationship. For example, A indicating B means that A directly indicates B, for example, B is acquired by A; A indirectly indicates B, for example, A indicates C and B is acquired by C; A and B are associated.

In the description of the embodiments of the present disclosure, the term "corresponding" mean that there is a direct correspondence relationship or indirect correspondence relationship between two objects, an association relationship between two objects, a relationship of indicating or being indicated, or a relationship of configuring and being configured.

In the embodiments of the present disclosure, the term "predefined" is achieved by pre-storing corresponding codes or forms in the device (for example, including the terminal device and the network device) or other means for indicating relevant information, and the specific implementations are not limited in the present disclosure. For example, the predefinition is defined in the protocol.

In the embodiments of the present disclosure, the term "protocol" indicates a standard protocol in the field of communications, for example, an LTE protocol, an NR protocol, or a related protocol applied to the future communication system, which is not limited in the present disclosure.

For better understanding of the technical solutions according to the embodiments of the present disclosure, related technologies in the present disclosure are described.

### 1. Zero-power communication

The zero-power communication emphasizes energy harvesting, backscattering communication, and low-power technologies.

As illustrated in FIG. 2, a typical zero-power communication system (for example, an RFID system) includes a network device (for example, a reader/writer in an RFID system) and a zero-power terminal (for example, an electronic tag). The terminal device is configured to transmit wireless power signals and downlink communication signals to the zero-power terminal and to receive backscattered signals from the zero-power terminal. A basic zero-power terminal includes an energy harvesting module, a backscatter communication module, and a low-power calculating module. In addition, the zero-power terminal further includes a memory or a sensor to store basic information (for example, an object identifier, and the like), sensing data (an environmental temperature, an environmental humidity), and the like.

For example, the energy harvesting module is configured to harvest the energy carried over radio waves in space (in FIG. 2, the network device transmits radio waves), and is further configured to drive the low-power calculating module in the zero-power terminal and achieve backscattering communication. Upon acquiring the energy, the zero-power terminal receives a control command from the network device and transmits data to the network device based on the control command using a backscatter mode. The transmitted data may be data stored in the zero-power terminal (for example, an identifier or pre-written information, such as production date, brand, manufacturer, and the like of the product). The zero-power terminal is further configured to load various sensors to report data captured by various sensors based on a zero-power mechanism.

Key technologies in the zero-power communication are described.

### 1). Radio frequency (RF) energy harvesting

As illustrated in FIG. 3, an RF energy harvesting module harvests energy of spatial electromagnetic waves based on an electromagnetic induction principle, and then acquires the power for driving the zero-power terminal, for example, driving a low-power demodulation and modulation module, a sensor, a memory read operation, and the like. Therefore, the zero-power terminal does not need traditional batteries.

### 2). Backscattering

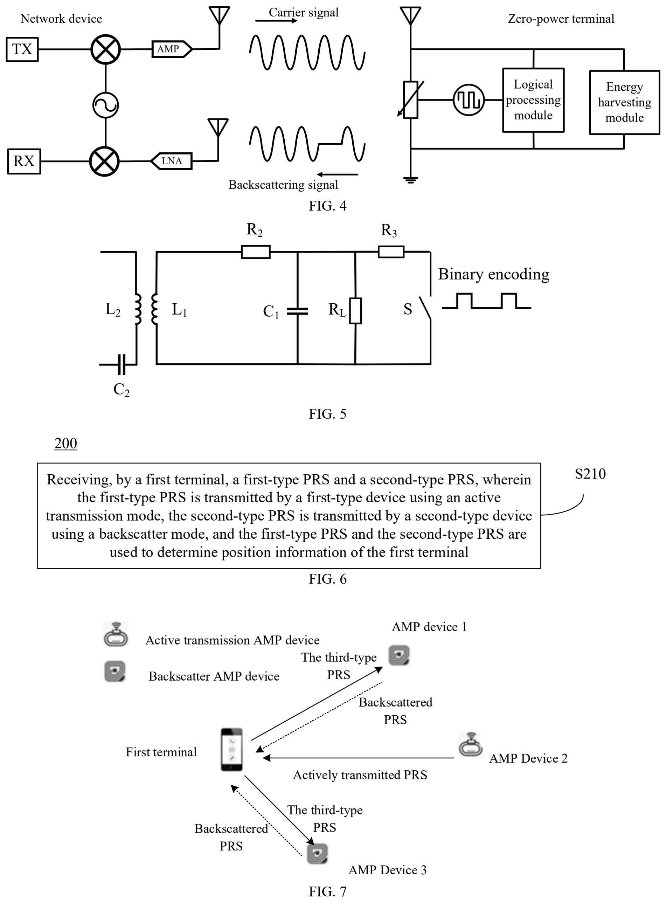

As illustrated in FIG. 4, the zero-power terminal receives the carrier signal from the network device, modulates the carrier signal, loads to-be-transmitted information, and transmits the modulated signal from the antenna. The information transmission process is referred to as backscattering communication. The backscatter and the load modulation functionality are inseparable. The load modulation adjusts and controls circuit parameters of an oscillation loop of the zero-power terminal based on the beat of a data stream, such that the parameters such as impedance of the zero-power terminal change accordingly, and the modulation process is complete. The load modulation mainly includes resistive load modulation and capacitive load modulation. In the resistive load modulation, a resistor is loaded and connected in parallel, and the resistor is controlled to be turned on or off based on a binary data stream, as illustrated in FIG. 5. The on-off of the resistor causes change of a voltage of the circuit, and thus amplitude-shift keying modulation (ASK) is implemented. That is, the modulation and transmission of the signal are achieved by adjusting the amplitude of the backscattered signal of the zero-power terminal. Similarly, in the capacitive load modulation, a circuit resonance frequency changes based on on-off of the capacitor to implement frequency-shift keying modulation (FSK). That is, the modulation and transmission of the signal are achieved by adjusting the operating frequency of the backscattered signal of the zero-power terminal.

It can be seen that the zero-power terminal modulates information of incoming signals by means of load modulation, such that the backscattering communication process is achieved. Therefore, the zero-power terminal has the following significant advantages:
(1) the zero-power terminal does not actively transmit signals, and thus a complex RF link (for example, a power amplifier (PA), an RF filter, and the like) is not required;
(2) the zero-power terminal does not need to actively generate a high-frequency signal, and thus does not need a high-frequency crystal oscillator; and
(3) a power of the terminal is not consumed in transmission of a signal from the terminal by means of backscattering communication.

### 3). Encoding technology

For data transmitted by the zero-power terminal, binary "1" and "0" are represented by different forms of codes. The RFID system typically adopts one of: reverse non-return-to-zero (NRZ) encoding, Manchester encoding, unipolar return-to-zero encoding, differential bi-phase (DBP) encoding, differentially encoding, pulse interval encoding (PIE), bidirectional spatial encoding (FM0), Miller differentially dynamic encoding, and the like. In general, different encoding technologies use different pulse signals to represent 0 and 1.

Due to extremely low cost, zero-power (no power consumption), small size, and other advantages, the zero-power communication has been widely used in various industries, for example, logistics for vertical industries, smart warehousing, smart agriculture, energy electricity, industrial Internet, and smart wearables, smart home devices and other personal applications.

In some scenarios, based on energy sources and usage modes of zero-power terminals, the zero-power terminals are classified into the following types:

### 1) Passive zero-power terminal

The zero-power terminal (for example, an electronic tag of an RFID system) does not need an internal battery. In a case where the zero-power terminal approaches the network device (for example, a reader/writer in the RFID system), the zero-power terminal is within a near-field range formed by antenna radiation of the network device. Therefore, the antenna of the zero-power terminal generates an induced current based on electromagnetic induction, and the induced current drives a low-power chip circuit of the zero-power terminal, such that demodulation of a forward link signal and signal modulation of a reverse link (or referred to as a reflection link) are achieved. For the backscatter link, the zero-power terminal transmits signals using the backscatter mode.

It can be seen that the passive zero-power terminal does not need the internal battery to drive the forward link or the reverse link, and thus is a true zero-power terminal.

The passive zero-power terminal does not need the battery, and the RF circuit and the baseband circuit are very simple. For example, the RF circuit and the baseband circuit do not need devices such as a low-noise amplifier (LNA), a PA, a crystal oscillator, and an analog-to-digital converter (ADC). Therefore, the passive zero-power terminal has many advantages, for example, small size, light weight, low price, and long service life.

### 2) Half-passive zero-power terminal

The half-passive zero-power terminal does not need a conventional battery, harvests radio wave energy using an RF energy harvesting module, and stores the harvested energy in an energy storage unit (such as a capacitor). Upon acquiring the energy, the energy storage unit drives the low-power chip circuit of the zero-power terminal, such that signals on the forward link signal are demodulated and signals on the reverse link are modulated. For the backscatter link, the zero-power terminal transmits the signals using the backscatter mode.

It can be seen that the half-passive zero-power terminal does not need the internal battery to drive the forward link or the reverse link. Although the energy stored in the capacitor is used in operation, the energy comes from the radio energy harvested by the energy harvesting module, and thus the half-passive zero-power terminal is also a true zero-power terminal.

The half-passive zero-power terminal inherits many advantages of the passive zero-power terminal, and thus has many advantages, for example, a small size, a light weight, a low price, and a long service life.

### 3) Active zero-power terminal

In some scenarios, the used zero-power terminal is also an active zero-power terminal, and the terminal is equipped with a bulit-in battery. The battery is used to drive the low-power chip circuit of the zero-power terminal, and signals on the forward link signal are demodulated and signals on the reverse link are modulated. For the backscatter link, the zero-power terminal transmits the signals using the backscatter mode. Therefore, the zero-power (no power consumption) of the terminal means that signal transmission on the reverse link does not need power from the terminal but relies on backscattering.

The active zero-power terminal is equipped with a built-in battery to power the RFID chip, such that a read and write range of the active zero-power terminal is increased, and the communication reliability is improved. Therefore, the active zero-power terminal has been applied in some scenarios where high requirements for communication distance, read delay, and the like are imposed.

In some scenarios, zero-power devices are classified into the following types based on transmitter types:

### (1) Zero-power devices based on backscattering (or referred to as the backscatter AMP device)

The zero-power device transmits uplink data using the backscatter mode. The zero-power device is not equipped with an active-transmission active transmitter and is only equipped with a transmitter for backscattering. Therefore, during data transmission by the zero-power device, the network device needs to provide carriers, and the zero-power device transmits data based on the carriers by backscattering.

### (2) Zero-power devices based on the active transmitter (or referred to as the active-transmission AMP device)

The zero-power device transmits uplink data using an active transmitter with the active transmission functionality. Therefore, the zero-power device transmits data using its own active transmitter, and the carrier is provided without the network device. The active transmitters suitable for the zero-power device may be ultra-low-power ASK and ultra-low-power FSK transmitters, and the like, and an overall power consumption may be reduced to 400 uw to 600 uw in transmitting a 100 uw signal.

### (3) Zero-power devices equipped with the backscatter transmitter and the active transmitter

The zero-power device supports the backscatter transmitter and the active transmitter. The zero-power device determines the signal transmission mode based on different situations (for example, a power amount and an available environmental energy) or based on scheduling by the network device. That is, the zero-power device determines whether signal transmission is implemented using the active transmitter or the backscatter transmitter.

The zero-power device is also referred to as an AMP device. The zero-power device that supports the backscattering is also referred to as a backscatter AMP device or a passive AMP device, and the zero-power device that supports the active transmission is also referred to as an active transmission AMP device or an active AMP device. The AMP device may be an Internet of things device that utilizes the environmental energy, such as RF energy, light energy, solar energy, thermal energy, mechanical energy, and other environmental energies. The device has no energy storage capacity or has a limited energy storage capacity.

In some scenarios, positioning using the AMP device is considered. For example, positioning is achieved by actively transmitting the PRS to the terminal device or by backscattering an incoming signal to the terminal device in a case of sufficient energy. The terminal device calculates a distance between the terminal device and the AMP device by measuring a power or a phase of the received signal. Because the position of the AMP device is known, the position of the terminal device is acquired through multiple measurements (at least three times of measurements).

In actual scenarios, various types of APM devices are deployed, for example, active AMP devices and passive AMP devices. As such, the terminal device receives various types of PRSs. That is, some PRSs are actively transmitted by the active AMP device, and some PRSs are backscattered by the passive AMP device. In this case, how to coordinate the two types of PRSs is a problem. Furthermore, in the backscatter scenario, the transmitter that transmits signals to the APM device and the receiver that receives signals from the APM device may not be co-located, which also affects the positioning accuracy. Therefore, how to accurately position using the APM device is an urgent problem to be solved.

For better understanding of the technical solutions according to the embodiments of the present disclosure, the technical solutions are described in detail hereinafter with reference to specific embodiments. As optional solutions, the related technologies may be arbitrarily combined with the technical solutions according to the embodiments of the present disclosure, which fall within the scope of protection of the embodiments of the present disclosure. The embodiments of the present disclosure include at least some of the following content.

FIG. 6 is a schematic interaction diagram of a method for wireless communication 200 according to some embodiments of the present disclosure. As illustrated in FIG. 6, the method 200 includes at least the following process.

In S210, a first-type device transmits a first-type PRS using an active transmission mode, and a second-type device transmits a second-type PRS using a backscatter mode.

Accordingly, a first terminal receives the first-type PRS and the second-type PRS. The first-type PRS and the second-type PRS are used to determine position information of the first terminal. That is, the first terminal is a to-be-positioned terminal.

It should be understood that the embodiments of the present disclosure are applicable to various positioning scenarios, such as a low-cost, maintenance-free, and high-accuracy positioning scenario. Specifically, for example, the embodiments of the present disclosure are applicable to smart home, smart manufacturing, logistics, warehouse, and other scenarios.

In some embodiments, positions of the first-type device and the second-type device are known, and the first-type device and the second-type device are also referred to as anchor devices.

It should be understood that neither the number of first-type devices for transmitting the first-type PRS nor the number of second-type devices for transmitting the second-type PRS is not limited in the present disclosure.

For example, the first terminal receives the first-type PRS from a first-type device and the second-type PRSs from a plurality of second-type devices.

For example, the first terminal receives the first-type PRSs from a plurality of first-type devices and the second-type PRS from a second-type device.

For example, the first terminal receives the first-type PRSs from a plurality of first-type devices and the second-type PRS from a plurality of second-type devices.

That is, the first terminal receives a first-type PRS and a plurality of second-type PRSs, receives a plurality of first-type PRSs and a second-type PRS, or receives a plurality of first-type PRSs and a plurality of second-type PRSs.

In some embodiments, the first-type device is an active transmission AMP device, a second terminal, or a network device.

In some embodiments, the active transmission AMP device is an AMP device with an active transmission capability or an AMP device having an active transmitter. In the embodiments of the present disclosure, the active transmission AMP device is also referred to as an active AMP device, for example, an active AMP tag.

In some embodiments, the first terminal and the second terminal are the terminal devices in the communication system illustrated in FIG. 1, for example, a UE in a cellular network, an STA in a WIFI system, and the like.

In some embodiments, the network terminal is the network device in the communication system 100 illustrated in FIG. 1, for example, an STA in a cellular network, an AP in a WIFI system, and the like.

In some embodiments, the second-type device is a backscatter AMP device.

In some embodiments, the backscatter AMP device is an AMP device with a backscattering capability or an AMP device having a passive transmitter. In the embodiments of the present disclosure, the backscatter AMP device is also referred to as a passive AMP device, for example, a passive AMP tag.

In the embodiments of the present disclosure, the first-type PRS is also referred to as an actively transmitted PRS, and the second-type PRS is also referred to as a backscattered PRS.

In some embodiments, the position information of the first terminal is calculated by the first terminal. For example, the first terminal measures the first-type PRS and the second-type PRS, and determines the position information of the first terminal based on the measurement result.

In some embodiments, the position information of the first terminal is calculated by the network device. For example, the first terminal measures the first-type PRS and the second-type PRS and reports the measurement result to the network device, and the network device calculates the position information of the first terminal based on the measurement result.

In some embodiments, the position information of the first terminal is calculated using a carrier-phase-based positioning mode. For example, the position information of the first terminal is determined based on phase information of at least three PRSs (for example, a first-type PRS and at least one second-type PRS).

Transmission modes of the first-type PRS and the second-type PRS are illustrated in conjunction with detailed embodiments hereinafter.

In some embodiments, the first-type PRS is periodically transmitted.

In some embodiments, periodical transmission of the first-type PRS by the first-type device is predefined, configured by the first terminal, or configured by the network device.

For example, the first-type PRS is transmitted by the first-type device based on first configuration information. The first configuration information is predefined or configured by the first terminal or the network device.

In some embodiments, the first configuration information is used to configure a transmission period and a transmission duration of the first-type PRS. The transmission duration is a duration for transmitting the first-type PRS within a period.

In some embodiments, the first configuration information is used to configure a transmission period, a transmission duration, and a duration of continuous transmission of the first-type PRS. The transmission duration is a duration where the first-type PRS is transmitted within a period, and the duration of continuous transmission is a total length of time where the first-type PRS is continuously transmitted, for example, a number of consecutive periods.

In some embodiments, the first configuration information is persistent, that is, the first-type device always transmits the first-type PRS based on the first configuration information. For example, the first-type device continuously transmits the first-type PRS based on a configured transmission period and a configured duration of continuous transmission. In this way, the singling overhead is low.

In some embodiments, the first configuration information is dynamic, that is, the first-type device only transmits the first-type PRS with a configured duration. For example, the transmission period and the duration of continuous transmission are dynamically configured. Furthermore, the first-type PRS is transmitted within the duration of continuous transmission. In this way, the power consumption is low. In some embodiments, the first terminal triggers the second-type device to transmit the backscattered PRS based on the first configuration information.

In some embodiments, the first-type PRS is transmitted on a trigger-basis or is transmitted on-demand. For example, the first-type PRS is transmitted in response to a first trigger signal from the first terminal. In this way, the power consumption of the first-type device is low.

In some embodiments, the first trigger signal is used to trigger the first-type device to transmit the first-type PRS once, or is used to trigger the first-type device to transmit the first-type PRS within a duration of continuous transmission. The specific mode is configured by the first terminal or the network device.

In some embodiments, the first configuration information is carried by the first trigger signal. That is, in a case where the first terminal triggers the first-type device to transmit the first-type PRS, the first terminal also indicates transmission configuration of the first-type PRS.

In some embodiments, the second-type PRS is transmitted on a trigger-basis. For example, the second-type PRS is transmitted in response to receiving the second trigger signal from the first terminal. In some embodiments, the second trigger signal is used to trigger the second-type device to transmit the second-type PRS once, or is used to trigger the second-type device to transmit the second-type PRS within a duration of continuous transmission. The specific mode is configured by the first terminal or the network device.

In some embodiments, the second-type PRS is transmitted on a trigger-basis. For example, the second-type device always backscatters the received incoming signal. In this case, the first terminal does not need to trigger the second-type device to backscatter the incoming signal.

In some embodiments, the second-type PRS is transmitted by backscattering the third-type PRS. That is, the third-type PRS is used as the incoming signal of the backscattered PRS.

In some embodiments, the third-type PRS is transmitted by the first terminal. That is, the incoming signal of the second-type PRS is provided by the to-be-positioned terminal.

In some embodiments, the first terminal transmits the third-type PRS based on a first timing advance, such that a time for receiving the first-type PRS by the first terminal is aligned with a time for receiving the second-type PRS by the first terminal. That is, the time for receiving the first-type PRS by the first terminal is overlapped with the time for receiving the second-type PRS by the first terminal.

In some embodiments, the first timing advance is configured by the network device. For example, the first timing advance is determined by the network device based on the network device and the measurement result of the first terminal.

In some embodiments, the first timing advance is autonomously determined by the first terminal.

In some embodiments, the first timing advance is configured based on a propagation delay between the first-type device and the first terminal, a propagation delay between the first terminal and the second-type device, and a processing duration of the first terminal to ensure alignment of the time for receiving the first-type PRS by the first terminal and the time for receiving the second-type PRS by the first terminal. For example, the first terminal predicts a time when the first-type PRS arrives at the first terminal based on the first configuration information. Furthermore, the third-type PRS is transmitted based on the first timing advance. In a case where the second-type device receives the third-type PRS, the third-type PRS is backscattered to transmit the second-type PRS, such that the time when the first-type PRS arrives at the first terminal is aligned with the time when the second-type PRS arrives at the first terminal.

It should be understood that in some embodiments, the time for receiving the first-type PRS by the first terminal is aligned with or overlapped with the time for receiving the second-type PRS by the first terminal. For example, in a case where the mobility of the first terminal is great, the time for receiving the first-type PRS by the first terminal needs to be aligned with the time for receiving the second-type PRS by the first terminal. In some embodiments, the time for receiving the first-type PRS by the first terminal is not aligned with or not overlapped with the time for receiving the second-type PRS by the first terminal. For example, in a case where the mobility of the first terminal is low or a position of the first terminal is fixed, the time for receiving the first-type PRS by the first terminal is not aligned with the time for receiving the second-type PRS by the first terminal (for example, the first-type PRS and the second-type PRS are received at different time instants). In this case, transmission of the first-type PRS by the first-type device and transmission of the second-type PRS by the second-type device are decoupled or independent, that is, the timing between the two transmission processes does not need coordinate. In this way, the actively transmitted PRS and the backscattered PRS are time-division multiplexed to avoid mutual interference in occupying the same radio resource.

In some embodiments, in a case where the first-type PRS is not aligned with the second-type PRS, the first terminal measures the first-type PRS and the second-type PRS, and a timestamp is added in the measurement result to indicate the time for receiving the PRS, such that whether a time difference between the time for receiving the first-type PRS and the time for receiving the second-type PRS is short enough is determined to determine whether the position of the first terminal changes in the measurement process.

In some embodiments, the second-type PRS has a frequency offset relative to the third-type PRS. The frequency offset is predefined or configurable, for example, configured by the network device or the first terminal.

For example, in a case where a time alignment requirement is imposed on the first-type PRS and the second-type PRS, a frequency offset is required prior to backscattering the third-type PRS by the second-type device, such that the backscattered PRS is orthogonal to the actively transmitted PRS. That is, the second-type PRS and the first-type PRS are frequency-divided, such that the positioning accuracy and the coverage of the PRS are improved.

For example, in a case where no time alignment requirement is imposed on the first-type PRS and the second-type PRS (that is, the first-type PRS is not aligned with or not overlapped with the second-type PRS), a frequency offset is required prior to backscattering the third-type PRS by the second-type device. In this case, the second-type PRS and the first-type PRS are frequency-divided and time-divided.

In some embodiments, the second-type PRS does not have a frequency offset relative to the third-type PRS.

For example, in a case where no time alignment requirement is imposed on the first-type PRS and the second-type PRS (that is, the first-type PRS is not aligned with or not overlapped with the second-type PRS), a frequency offset is not required for the third-type PRS by the second-type device. In this case, the second-type PRS and the first-type PRS are time-divided.

In some embodiments, the first-type PRS and the third-type PRS are transmitted over the same channel. That is, the frequency ranges of the first-type PRS and the third-type PRS are overlapped with each other.

In this case, in a case where the time alignment requirement is imposed, a frequency offset is performed on the third-type PRS to acquire the second-type PRS to ensure that the first-type PRS is orthogonal to the second-type PRS. In this case, the first-type PRS and the second-type PRS are frequency-divided. Alternatively, in a case where no time alignment requirement is imposed, the first-type PRS and the second-type PRS are time-divided to ensure that the first-type PRS is orthogonal to the second-type PRS. In this case, the frequency offset is or is not performed on the third-type PRS.

In some embodiments, the third-type PRS is transmitted by the first-type device. In this case, the to-be-positioned terminal does not need to provide the incoming signal of the backscattered PRS and is in a passive state for receiving the PRS. The backscattered PRS is also referred to as a forwarding backscattered PRS.

In some embodiments, the third-type PRS is periodically transmitted by the first-type device. For specific implementations, reference may be made to the mode for transmitting the first-type PRS, which are not elaborated herein. In some embodiments, in a case where the first-type device has a power supply or a large-capacity battery (for example, the first-type device is the second terminals or physical devices), the third-type PRS is transmitted using the mode.

In some embodiments, the third-type PRS is transmitted on a trigger-basis or is transmitted on-demand. For example, the third-type PRS is transmitted in response to a third trigger signal from the first terminal. Furthermore, the second-type device backscatters the incoming signal (that is, the third-type PRS) to the first terminal. In some embodiments, in a case where the first-type device has no power supply or has a limited energy storage capacity, for example, in a case where the first-type device is an active AMP tag that relies on energy harvesting, the third-type PRS is transmitted using the mode.

In some embodiments, the second-type PRS has a frequency offset relative to the third-type PRS. The frequency offset is predefined or configurable. For example, prior to backscattering the third-type PRS, the second-type device performs the frequency offset on the third-type PRS, such that the actively transmitted PRS is orthogonal to the backscattered PRS.

In some embodiments, the first-type device periodically transmits the actively transmitted PRS or transmits the actively transmitted PRS on a trigger-basis, and the first-type device periodically transmits the third-type PRS or transmits the third-type PRS based on trigger. Moreover, the second-type device backscatters the third-type PRS on a trigger-basis or not on a trigger-basis. In this way, the first terminal receives the actively transmitted PRS from the first-type device and the backscattered PRS from the second-type device, and measures the actively transmitted PRS and the backscattered PRS for subsequent positioning.

The positioning modes according to the embodiments of the present disclosure are illustrated in conjunction with detailed embodiments hereinafter.

### Embodiments 1

As illustrated in FIG. 7, the to-be-positioned terminal is the first terminal, and the AMP devices that assist positioning include an AMP device 1, an AMP device 2, and an AMP device 3. The AMP device 1 and the AMP device 3 are backscattering AM devices, that is, the second-type device, and the AMP device 2 is an active transmission AMP device, that is, the first-type device. It should be understood that the number of first-type devices and the number of second-type devices in FIG. 7 are only illustrative. For example, a plurality of the first-type device are disposed, and one second-type device is disposed.

Specifically, the first terminal receives the first-type PRS actively transmitted by the AMP device 2, and the second-type PRS backscattered by the AMP device 1 and the second-type PRS backscattered by the AMP device 3.

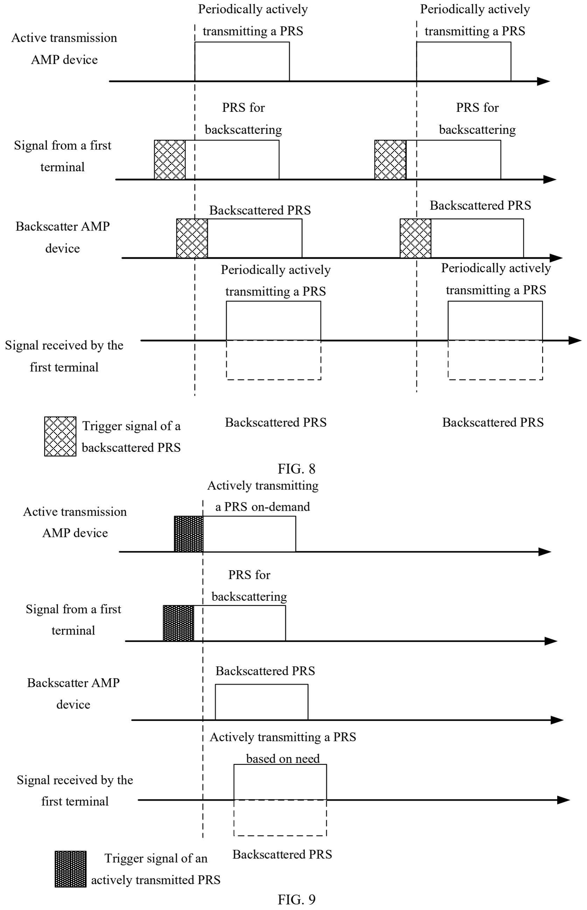

In some embodiments, as illustrated in FIG. 8, the active transmission AMP device periodically transmits the actively transmitted PRS. For the specific transmission mode, reference may be made to relevant description in the above embodiments.

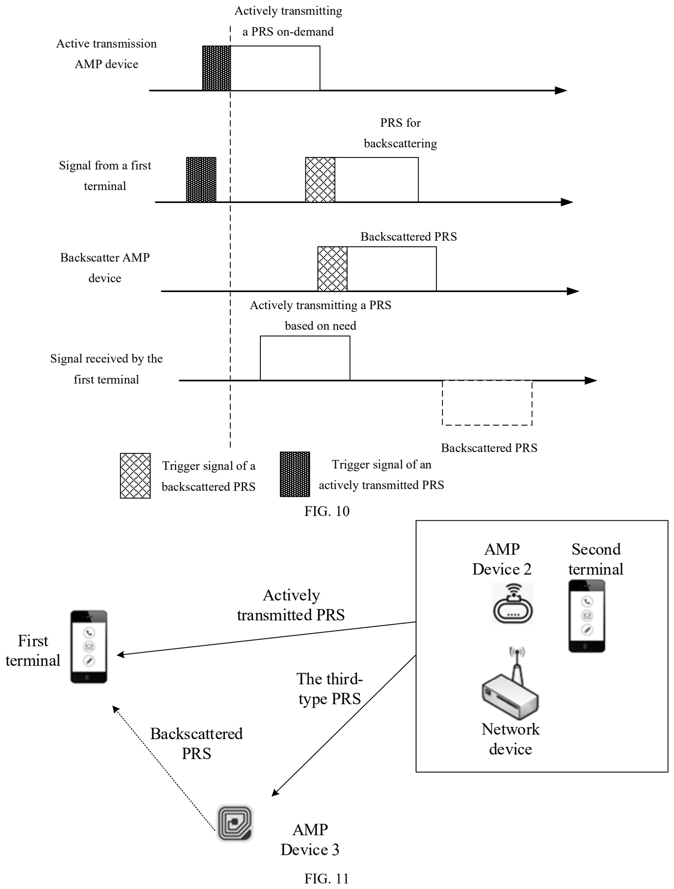

In some embodiments, as illustrated in FIG. 9 and FIG. 10, the active transmission AMP device transmits the actively transmitted PRS on-demand. For example, in a case where the active transmission AMP device receives the first trigger signal from the first terminal, the active transmission AMP device actively transmits the PRS. The first trigger signal is used to trigger the active transmission AMP device to transmit the actively transmitted PRS. For specific transmission mode, reference may be made to relevant description in the above embodiments.

In some embodiments, the first terminal transmits the PRS for backscattering, that is, the third-type PRS. For example, the third-type PRS is periodically transmitted as illustrated in FIG. 8, or, the third-type PRS is transmitted on-demand as illustrated in FIG. 9 and FIG. 10,.

In some embodiments, as illustrated in FIG. 8 and FIG. 10, the backscatter AMP device transmits the backscattered PRS on a trigger-basis. For example, in a case where the backscatter AMP device receives the second trigger signal from the first terminal, the backscatter AMP device backscatters the received incoming signal. The second trigger signal is used to trigger the backscatter AMP device to transmit the backscattered PRS, or, the backscattered PRS is transmitted not on a trigger-basis as illustrated in FIG. 9. For example, the received incoming signal is always backscattered.

In some embodiments, as illustrated in FIG. 8 and FIG. 9, the actively transmitted PRS is aligned with the backscattered PRS received by the first terminal. In this case, the backscatter AMP device needs to perform the frequency offset on the third-type PRS prior to backscattering.

In some embodiments, as illustrated in FIG. 10, the actively transmitted PRS is not aligned with or not overlapped with the backscattered PRS received by the first terminal. In this case, the backscatter AMP device performs or does not perform the frequency offset on the third-type PRS prior to backscattering.

### Embodiments 2

As illustrated in FIG. 11, the to-be-positioned terminal is the first terminal, and the AMP devices that assist positioning include a first-type device and an AMP device 3. The first-type device is an active transmission AMP device, a second terminal, or a network device, and the AMP device 3 is a backscatter AMP device, that is, the second-type device. One or more first-type devices are disposed, and one or more second-type devices are disposed.

Specifically, the first terminal receives the first-type PRS actively transmitted by the first-type device and the second-type PRS backscattered by the AMP device 3.

Embodiments 2 differ from Embodiments 1 in that the incoming signal (that is, the third-type PRS) used for backscattering by the second-type device is provided by the first terminal in Embodiments 1, and the incoming signal (that is, the third-type PRS) used for backscattering by the second-type device is provided by the first-type device in Embodiments 2.

In some embodiments, the third-type PRS is periodically transmitted by the first-type device or is transmitted on-demand. For example, the third-type PRS is transmitted in response to the third trigger signal from the first terminal. For specific transmission mode, reference may be made to relevant description in the above embodiments.

In summary, the embodiments of the present disclosure provide a positioning scheme where the to-be-positioned terminal is positioned based on the actively transmitted PRS and the backscattered PRS, and further provide a transmission mode and a coordination scheme of the actively transmitted PRS and the backscattered PRS, such that the positioning accuracy based on the actively transmitted PRS and the backscattered PRS is ensured. Moreover, due to the advantages of the backscattered AMP device such as low cost and maintenance-free, positioning based on the backscattered PRS is low-cost and high-precision.

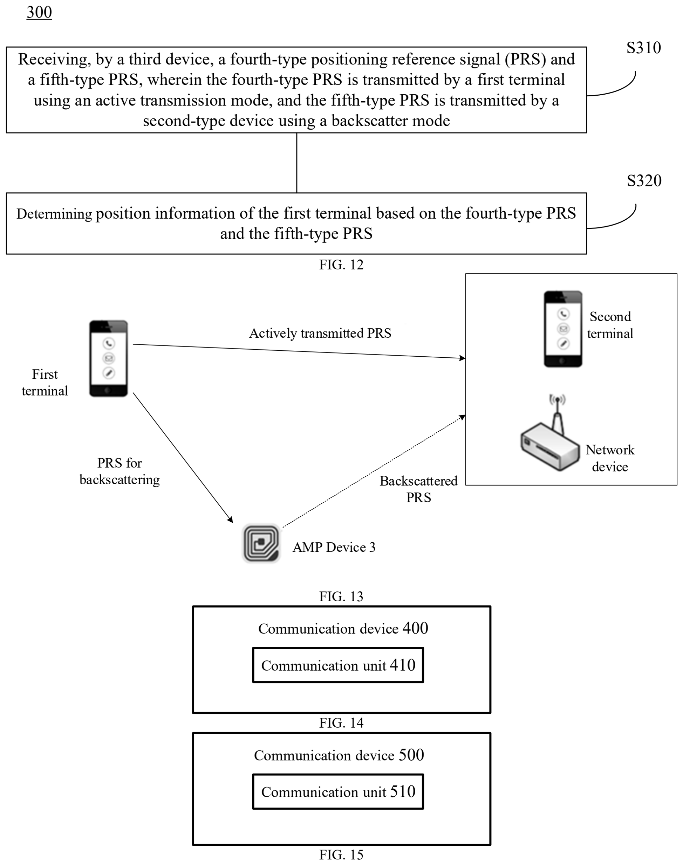

FIG. 12 is a schematic diagram of a method 300 for wireless communication according to some embodiments of the present disclosure. As illustrated in FIG. 12, the method 300 includes at least the following processes.

In S310, a first terminal transmits a fourth-type PRS using an active transmission mode, a second-type device transmits a fifth-type PRS using a backscatter mode, and a third device receives the fourth-type PRS.

In S320, position information of the first terminal is determined based on the fourth-type PRS and the fifth-type PRS.

It should be understood that the embodiments of the present disclosure are applicable to various positioning scenarios, such as a low-cost, maintenance-free, and high-accuracy positioning scenario. Specifically, for example, the embodiments of the present disclosure are applicable to smart home, smart manufacturing, logistics, warehouse, and other scenarios.

In some embodiments, a position of the second-type device is known, and the second-type device is also referred to as an anchor device.

It should be understood that a number of second-type devices for transmitting the second-type PRS are not limited in the present disclosure. For example, the third terminal receives a fourth-type PRS and a plurality of fifth-type PRSs. The plurality of fifth-type PRSs include at least two fifth-type PRSs.

For example, the third terminal is a second terminal or a network device.

In some embodiments, the first terminal and the second terminal are the terminal device in the communication system illustrated in FIG. 1, for example, a UE in a cellular network, an STA in a Wi-Fi system, or the like.

In some embodiments, the network terminal is the network device in the communication system 100 illustrated in FIG. 1, for example, an STA in a cellular network, an AP in a Wi-Fi system, or the like.

In some embodiments, the second-type device is a backscatter AMP device.

In some embodiments, the backscatter AMP device is an AMP device with a backscattering capability or an AMP device having a passive transmitter. In the embodiments of the present disclosure, the backscatter AMP device is also referred to as a passive AMP device, for example, a passive AMP tag.

In the embodiments of the present disclosure, the fourth-type PRS is also referred to as an actively transmitted PRS or an active PRS, and the fifth-type PRS is also referred to as a backscattered PRS.

In some embodiments, the third terminal measures the fourth-type PRS and the fifth-type PRS, and determines the position information of the first terminal based on the measurement result. For example, the third terminal determines the position information of the first terminal based on phase information of at least three PRSs (for example, an actively transmitted PRS and at least two backscattered PRSs).

In some embodiments, the fourth-type PRS is periodically transmitted or is transmitted on-demand.

In some embodiments, periodical transmission of the fourth-type PRS by the first terminal is predefined or configured by the network device.

For example, the fourth-type PRS is transmitted by the first terminal based on second configuration information. The second configuration information is predefined, or the first configuration information is configured by the network device.

In some embodiments, the second configuration information is used for configuring a transmission period and a transmission duration of the fourth-type PRS. The transmission duration is a duration for transmitting the fourth-type PRS within a period.

In some embodiments, the second configuration information is used for configuring a transmission period, a transmission duration, and a duration of continuous transmission of the fourth-type PRS. The transmission duration is a duration where the fourth-type PRS is transmitted within a period, and the duration of continuous transmission is a length of time where the fourth-type PRS is continuously transmitted, for example, a number of consecutive periods.

In some embodiments, the second configuration information is persistent, that is, the first terminal always transmits the fourth-type PRS based on the second configuration information. For example, the first terminal contiguously transmits the fourth-type PRS based on a configured transmission period and a configured duration of continuous transmission. In this way, the singling overhead is low.

In some embodiments, the second configuration information is dynamic, that is, the first terminal only transmits the fourth-type PRS with a configured duration. For example, the transmission period and the duration of continuous transmission are dynamically configured. Furthermore, the fourth-type PRS is transmitted within the duration of continuous transmission. In this way, the power consumption is low.

In some embodiments, the fifth-type PRS is transmitted by backscattering the sixth-type PRS from the first terminal. That is, the incoming signal of the backscattered PRS is provided by the to-be-positioned terminal.

In some embodiments, the sixth-type PRS is periodically transmitted or is transmitted on-demand. In some embodiments, for the transmission mode of the sixth-type PRS, reference may be made to the transmission mode of the fourth-type PRS, which are not elaborated herein.

In some embodiments, the fifth-type PRS is transmitted on a trigger-basis. For example, the first terminal transmits the fourth trigger signal prior to transmitting the sixth-type PRS, and the second-type device transmits the fifth-type PRS in a case where the second-type device receives the fourth trigger signal from the first terminal.

In some embodiments, the fifth-type PRS is transmitted not on a trigger-basis. For example, the second-type device always backscatters the received incoming signal. In this case, the first terminal does not need to trigger the second-type device to backscatter the incoming signal.

In some embodiments, the fifth-type PRS has a frequency offset relative to the sixth-type PRS. The frequency offset is predefined or configurable, for example, configured by the network device or by the first terminal.

In some embodiments, prior to backscattering the sixth-type PRS, the second-type device performs the frequency offset on the sixth-type PRS, such that the actively transmitted PRS is orthogonal to the backscattered PRS.

The positioning modes according to the embodiments of the present disclosure are illustrated in conjunction with detailed embodiments hereinafter.

As illustrated in FIG. 13, the to-be-positioned terminal is the first terminal, the third device performs PRS measurement, the first terminal is configured to transmits the PRS using an active transmission mode, and the AMP device 3 is configured to transmits the PRS using a backscatter mode. The third device is a second terminal or a network device, and the AMP device 3 is a backscatter AMP device. Specifically, the third device receives the actively transmitted PRS from the first terminal and the backscattered PRS from the backscatter AMP device. It should be understood that in the example illustrated in FIG. 13, two or more backscatter AMP devices are disposed.

In some embodiments, the first terminal periodically transmits the actively transmitted PRS and the backscattered PRS (that is, the sixth-type PRS), and the backscatter AMP device backscatters the sixth-type PRS to transmit the backscattered PRS to the third device. For example, the backscatter AMP device backscatters the received incoming signal in a case where the backscatter AMP device receives the trigger signal from the first terminal, or, the backscatter AMP device always backscatters the received incoming signal. Furthermore, the third device measures the received actively transmitted PRS and the received backscattered PRS to determine the position information of the first terminal.

In summary, the embodiments of the present disclosure provide a positioning scheme where the non-to-be-positioned terminal is positioned based on the actively transmitted PRS and the backscattered PRS, and further provide a transmission mode of the actively transmitted PRS and the backscattered PRS, such that the positioning accuracy based on the actively transmitted PRS and the backscattered PRS is ensured. Moreover, due to the advantages of the backscattered AMP device such as low cost and maintenance-free, positioning based on the backscattered PRS is low-cost and high-precision.

Method embodiments of the present disclosure are described in detail in conjunction with FIG. 6 to FIG. 13, and apparatus embodiments of the present disclosure are described in detail in conjunction with FIG. 14 to FIG. 22. It should be understood that the apparatus embodiments correspond to the method embodiments, and thus for similar description, reference may be made to the method embodiments.

FIG. 14 is a schematic block diagram of a communication device 400 according to some embodiments of the present disclosure. As illustrated in FIG. 14, the communication device 400 includes:

a communication unit 410, configured to receive a first-type PRS and a second-type PRS, wherein the first-type PRS is transmitted by a first-type device using an active transmission mode, the second-type PRS is transmitted by a second-type device using a backscatter mode, and the first-type PRS and the second-type PRS are used to determine position information of the communication device 400.

In some embodiments, the first-type device is an active transmission AMP device, a second terminal, or a network device.

In some embodiments, the second-type device is a backscatter AMP device.

In some embodiments, the first-type PRS is periodically transmitted, or is transmitted in response to a first trigger signal from the communication device 400.

In some embodiments, the first-type PRS is transmitted by the first-type device based on first configuration information, wherein the first configuration information is predefined or configured by the communication device 400 or a network device.

In some embodiments, the first configuration information is configured by the communication device 400 and is carried in the first trigger signal.

In some embodiments, the second-type PRS is transmitted in response to a second trigger signal from the communication device 400.

In some embodiments, the second-type PRS is transmitted by backscattering a third-type PRS.

In some embodiments, the third-type PRS is transmitted by the communication device 400.

In some embodiments, the third-type PRS is transmitted by the communication device 400 based on a first timing advance.

In some embodiments, the first timing advance is configured by a network device, and is determined by the network device based on the network device and a measurement result of the communication device 400.

In some embodiments, the first timing advance is autonomously determined by the communication device 400.

In some embodiments, a time for receiving the first-type PRS by the communication device 400 is not aligned with a time for receiving the second-type PRS by the communication device 400.

In some embodiments, the second-type PRS has a configurable or predefined frequency offset relative to the third-type PRS.

In some embodiments, a time for receiving the first-type PRS by the communication device 400 is not overlapped with a time for receiving the second-type PRS by the communication device 400.

In some embodiments, the second-type PRS has a configurable or predefined frequency offset relative to the third-type PRS, or the second-type PRS does not have a frequency offset relative to the third-type PRS.

In some embodiments, the third-type PRS is transmitted by the first-type device.

In some embodiments, the third-type PRS is periodically transmitted by the first-type device, or is transmitted by the first-type device in response to a third trigger signal from the communication device 400.

In some embodiments, the third-type PRS has a configurable or predefined frequency offset relative to the second-type PRS.

In some embodiments, the communication unit is a communication interface or a transceiver, or an input/output interface of a communication chip or a system on chip. The processing unit is one or more processors.

It should be understood that the communication device 400 according to the embodiments of the present disclosure may correspond to the first terminal in the method embodiments of the present disclosure, and the above and other operations and/or functions of various units of the communication device 400 are intended to implement corresponding processes of the first terminal in the method illustrated in FIGS. 6 to 11, which are not elaborated herein for brevity.

FIG. 15 is a schematic block diagram of a communication device 500 according to some embodiments of the present disclosure. As illustrated in FIG. 15, the communication device 500 includes:

a communication unit 510, configured to transmit a second-type PRS to a first terminal, wherein the second-type PRS is transmitted by the communication device 500 using a backscatter mode, and the second-type PRS is used to determine position information of the first terminal.

In some embodiments, the communication device 500 is a backscatter AMP device.

In some embodiments, the second-type PRS is transmitted in response to a second trigger signal from the first terminal.

In some embodiments, the second-type PRS is transmitted by backscattering a third-type PRS.

In some embodiments, the third-type PRS is transmitted by the first terminal.

In some embodiments, the third-type PRS is transmitted by the first terminal based on a first timing advance.

In some embodiments, the first timing advance is configured by a network device, and is determined by the network device based on the network device and a measurement result of the first terminal.

In some embodiments, the first timing advance is autonomously determined by the first terminal.

In some embodiments, a time for receiving a first-type PRS by the first terminal is aligned with a time for receiving the second-type PRS by the first terminal.

In some embodiments, the second-type PRS has a configurable or predefined frequency offset relative to the third-type PRS.

In some embodiments, a time for receiving a first-type PRS by the first terminal is not overlapped with a time for receiving the second-type PRS by the first terminal.

In some embodiments, the second-type PRS has a configurable or predefined frequency offset relative to the third-type PRS, or the second-type PRS does not have a frequency offset relative to the third-type PRS.

In some embodiments, the third-type PRS is transmitted by a first-type device, and the first-type device is further configured to transmit the first-type PRS to the first terminal, and the first-type PRS and the second-type PRS are used to determine position information of the first terminal.

In some embodiments, the third-type PRS is periodically transmitted by the first-type device, or is transmitted by the first-type device in response to a third trigger signal from the first terminal.

In some embodiments, the third-type PRS has a configurable or predefined frequency offset relative to the second-type PRS.

In some embodiments, the communication unit is a communication interface or a transceiver, or an input/output interface of a communication chip or a system on chip. The processing unit is one or more processors.

It should be understood that the communication device 500 according to the embodiments of the present disclosure may correspond to the second-type device in the method embodiments of the present disclosure, and the above and other operations and/or functions of various units of the communication device 500 are intended to implement corresponding processes of the second-type device in the method illustrated in FIGS. 6 to 11, which are not elaborated herein for brevity.

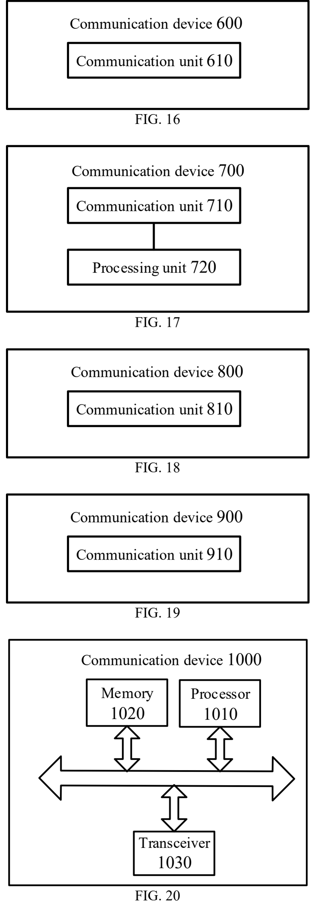

FIG. 16 is a schematic block diagram of a communication device 600 according to some embodiments of the present disclosure. As illustrated in FIG. 16, the communication device 600 includes:
a communication unit 610, configured to transmit a first-type PRS to a first terminal, wherein the first-type PRS is transmitted by the communication device 600 using an active transmission mode, and the first-type PRS is used to determine position information of the first terminal.

In some embodiments, the communication device 600 is an active transmission AMP device, a second terminal, or a network device.

In some embodiments, the first-type PRS is periodically transmitted, or is transmitted in response to a first trigger signal from the first terminal.

In some embodiments, the first-type PRS is transmitted by the communication device 600 based on first configuration information, wherein the first configuration information is predefined or configured by the first terminal or a network device.

In some embodiments, the first configuration information is configured by the first terminal and is carried in the first trigger signal.

In some embodiments, the communication unit 610 is further configured to:
transmit a third-type PRS to a second-type device, wherein the third-type PRS is used for the second-type device to acquire a second-type PRS by backscattering, and the first-type PRS and the second-type PRS are used to determine position information of the first terminal.

In some embodiments, the third-type PRS is periodically transmitted by the communication device 600, or is transmitted by the communication device 600 in response to a third trigger signal from the first terminal.

In some embodiments, the third-type PRS has a configurable or predefined frequency offset relative to the second-type PRS.

In some embodiments, the second-type device is a backscatter AMP device.

In some embodiments, the communication unit is a communication interface or a transceiver, or an input/output interface of a communication chip or a system on chip. The processing unit is one or more processors.

It should be understood that the communication device 600 according to the embodiments of the present disclosure may correspond to the first-type device in the method embodiments of the present disclosure, and the above and other operations and/or functions of various units of the communication device 600 are intended to implement corresponding processes of the first-type device in the method illustrated in FIGS. 6 to 11, which are not elaborated herein for brevity.

FIG. 17 is a schematic block diagram of a communication device 700 according to some embodiments of the present disclosure. As illustrated in FIG. 17, the communication device 700 includes:
a communication unit 710, configured to receive a fourth-type PRS and a fifth-type PRS, wherein the fourth-type PRS is transmitted by a first terminal using an active transmission mode, the fifth-type PRS is transmitted by a second-type device using a backscatter mode; and
a processing unit 720, configured to determine position information of the first terminal based on the fourth-type PRS and the fifth-type PRS.

In some embodiments, the communication device 700 is a second terminal or a network device.

In some embodiments, the second-type device is a backscatter AMP device.

In some embodiments, the fourth-type PRS is periodically transmitted.

In some embodiments, the fifth-type PRS is transmitted by backscattering a sixth-type PRS from the first terminal.

In some embodiments, the fifth-type PRS has a configurable or predefined frequency offset relative to the sixth-type PRS.

In some embodiments, the fifth-type PRS is transmitted by the second-type device in response to a fourth trigger signal from the first terminal.

In some embodiments, the communication unit is a communication interface or a transceiver, or an input/output interface of a communication chip or a system on chip. The processing unit is one or more processors.

It should be understood that the communication device 400 according to the embodiments of the present disclosure may correspond to the third device in the method embodiments of the present disclosure, and the above and other operations and/or functions of various units of the communication device 700 are intended to implement corresponding processes of the third device in the method illustrated in FIGS. 12 to 13, which are not elaborated herein for brevity.

FIG. 18 is a schematic block diagram of a communication device 800 according to some embodiments of the present disclosure. As illustrated in FIG. 18, the communication device 800 includes:
a communication unit 810, configured to transmit a fourth-type PRS to a third device, wherein the fourth-type PRS is transmitted using an active transmission mode, and the fourth-type PRS is used to determine position information of the communication device 800.

In some embodiments, the third device is a second terminal or a network device.

In some embodiments, the fourth-type PRS is periodically transmitted.

In some embodiments, the communication unit 810 is further configured to:
transmit a sixth-type PRS to a second-type device, wherein the sixth-type PRS is used for the second-type device to acquire a fifth-type PRS by backscattering, and the fourth-type PRS and the fifth-type PRS are used to determine position information of the communication device 800.

In some embodiments, the fifth-type PRS has a configurable or predefined frequency offset relative to the sixth-type PRS.

In some embodiments, the second-type device is a backscatter AMP device.

In some embodiments, the fifth-type PRS is transmitted by the second-type device in response to a fourth trigger signal from the communication device 800.

In some embodiments, the communication unit is a communication interface or a transceiver, or an input/output interface of a communication chip or a system on chip. The processing unit is one or more processors.

It should be understood that the communication device 800 according to the embodiments of the present disclosure may correspond to the first terminal in the method embodiments of the present disclosure, and the above and other operations and/or functions of various units of the communication device 800 are intended to implement corresponding processes of the first terminal in the method illustrated in FIGS. 12 to 13, which are not elaborated herein for brevity.

FIG. 19 is a schematic block diagram of a communication device 900 according to some embodiments of the present disclosure. As illustrated in FIG. 19, the communication device 900 includes:
a communication unit 910, configured to transmit a fifth-type PRS to a third device, wherein the fifth-type PRS is transmitted using a backscatter mode, and the fifth-type PRS is used to determine position information of a first terminal.

In some embodiments, the third device is a second terminal or a network device.

In some embodiments, the communication device 900 is a backscatter AMP device.

In some embodiments, the fifth-type PRS is transmitted by backscattering a sixth-type PRS from the first terminal.

In some embodiments, the fifth-type PRS has a configurable or predefined frequency offset relative to the sixth-type PRS.

In some embodiments, the fifth-type PRS is transmitted by the second-type device in response to a fourth trigger signal from the first terminal.

In some embodiments, the communication unit is a communication interface or a transceiver, or an input/output interface of a communication chip or a system on chip. The processing unit is one or more processors.

It should be understood that the communication device 900 according to the embodiments of the present disclosure may correspond to the second-type device in the method embodiments of the present disclosure, and the above and other operations and/or functions of various units of the communication device 900 are intended to implement corresponding processes of the second-type device in the method illustrated in FIGS. 12 to 13, which are not elaborated herein for brevity.

FIG. 20 is a schematic structural diagram of a communication device 1000 according to some embodiments of the present disclosure. The communication device 1000 illustrated in FIG. 20includes a processor 110. The processor 1010 is configured to call and run one or more computer programs in a memory to perform the methods according to the embodiments of the present disclosure.

In some embodiments, as illustrated in FIG. 20, the communication device 1000 further includes a memory 1020. The processor 1010 is configured to call and run one or more computer programs in the memory 1020 to perform the methods according to the embodiments of the present disclosure.

The memory 1020 is a device independent of the processor 1010, or is integrated in the processor 1010.

In some embodiments, as illustrated in FIG. 20, the communication device 1000 further includes a transceiver 1030. The processor 1010 may control communication of the transceiver 1030 with other devices. In particular, the transceiver 1030 transmits information or data to other devices, or receives information or data from other devices.

The transceiver 1030 includes a transiter and a receiver. The transceiver 1030 further includes one or more antennas.

In some embodiments, the communication device 1000 is the first terminal in the embodiments of the present disclosure, and performs the corresponding processes performed by the first terminal in the methods according to the embodiments of the present disclosure, which are not elaborated herein for brevity.

In some embodiments, the communication device 1000 is the first-type device in the embodiments of the present disclosure, and performs the corresponding processes performed by the first-type device in the methods according to the embodiments of the present disclosure, which are not elaborated herein for brevity.

In some embodiments, the communication device 1000 is the second-type device in the embodiments of the present disclosure, and performs the corresponding processes performed by the second-type device in the methods according to the embodiments of the present disclosure, which are not elaborated herein for brevity.

In some embodiments, the communication device 1000 is the third device in the embodiments of the present disclosure, and performs the corresponding processes performed by the third device in the methods according to the embodiments of the present disclosure, which are not elaborated herein for brevity.

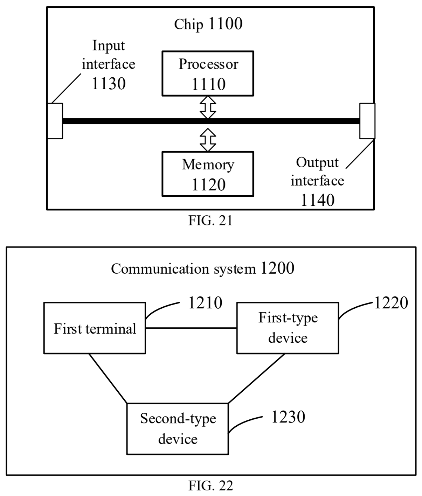

FIG. 21 is a schematic block diagram of a chip according to some embodiments of the present disclosure. The chip 1100 illustrated in FIG. 21 includes a processor 1110. The processor 1110 is configured to call and run one or more computer programs in a memory to perform the methods according to the embodiments of the present disclosure.

In some embodiments, as illustrated in FIG. 21, the chip 1100 further includes a memory 1120. The processor 1110 is configured to call and run one or more computer programs in the memory 1120 to perform the methods according to the embodiments of the present disclosure.

The memory 1120 is a device independent of the processor 1110, or is integrated in the processor 1110.

In some embodiments, the chip 1100 further includes an input interface 1130. The processor 1110 may control communication of the input interface 1130 with other devices. In particular, the input interface 1130 acquires information or data from other devices.

In some embodiments, the chip 1100 further includes an output interface 1140. The processor 1110 may control communication of the output interface 1140 with other devices. In particular, the output interface 1140 transmits information or data to other devices.

In some embodiments, the chip 1100 is applicable to the first terminal in the embodiments of the present disclosure, and performs the corresponding processes performed by the first terminal in the methods according to the embodiments of the present disclosure, which are not elaborated herein for brevity.

In some embodiments, the chip 1100 is applicable to the first-type device in the embodiments of the present disclosure, and performs the corresponding processes performed by the first-type device in the methods according to the embodiments of the present disclosure, which are not elaborated herein for brevity.

In some embodiments, the chip 1100 is applicable to the second-type device in the embodiments of the present disclosure, and performs the corresponding processes performed by the second-type device in the methods according to the embodiments of the present disclosure, which are not elaborated herein for brevity.

In some embodiments, the chip 1100 is applicable to the third device in the embodiments of the present disclosure, and performs the corresponding processes performed by the third device in the methods according to the embodiments of the present disclosure, which are not elaborated herein for brevity.

It should be understood that the chip in the embodiments of the present disclosure may also referred to as a system-level chip, a system chip, a chip system, a system-on-chip, or the like.

FIG. 22 is a schematic block diagram of a communication system 1200 according to some embodiments of the present disclosure. As illustrated in FIG. 22, the communication system 1200 includes a first terminal 1210, a first-type device 1220, and a second-type device 1230.

The first terminal 1210 is configured to implement the corresponding functions implemented by the first terminal in the above methods, the first-type device 1220 is configured to implement the corresponding functions implemented by the first-type device in the above methods, and the second-type device 1230 is configured to implement the corresponding functions implemented by the second-type device in the above methods, which are not elaborated herein for brevity.

It should be understood that the processor in the embodiments of the present disclosure is an integrated circuit chip with a signal processing capability. In the implementations, the processes in the method embodiments are achieved by integrated logic circuits of hardware in the processor or instructions in the software form. The processor is a general processor, a digital signal processor (DSP), an application-specific integrated circuit (ASIC), a field-programmable gate array (FPGA), any other programmable logic device, discrete gate, transistor logic device, or discrete hardware assembly that is capable of achieving or performing various methods, processes, and logic blocks according to the embodiments of the present disclosure. The general processor is a microprocessor, any conventional processor, or the like. The processes in the methods according to the embodiments of the present disclosure may be directly embodied as being processed by a hardware decoding processor or being performed by a combination of hardware and software modules in the decoding processor. The software modules may be disposed in a random-access memory (RAM), a flash memory, a read-only memory (ROM), a programmable read-only memory (PROM), an electrically erasable programmable memory, a register, and other storage media mature in the field. The storage medium is disposed in the memory, and the processor reads the information in the memory and combines with its hardware to perform the processes of the method.

It should be understood that the memory in embodiments of the present disclosure may be a volatile or non-volatile memory, or include both the volatile memory and the non-volatile memory. The non-volatile memory may be a ROM, a PROM, an erasable PROM (EPROM), an electrically EPROM (EEPROM), or a flash memory. The volatile memory is a random-access memory (RAM) used as an external cache. By way of example but not limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM). It should be noted that the system and the memory described herein are intended to include, but not limit to these and any other suitable type of memories.

It should be understood that the memory is exemplary but not for limitation. For example, the memory in the embodiments of the present disclosure may also be an SRAM, a DRAM, an SDRAM, a DDR SDRAM, an ESDRAM, an SLDRAM, a DR RAM, or the like. That is, the memory in the embodiments of the present disclosure is intend to include, but not limit to these and any other suitable type of memory.

Some embodiments of the present disclosure further provide a computer-readable storage medium for storing one or more computer programs.

In some embodiments, the computer-readable storage medium is applicable to the first terminal in the embodiments of the present disclosure, and performs the corresponding processes performed by the first terminal in the methods according to the embodiments of the present disclosure, which are not elaborated herein for brevity.

In some embodiments, the computer-readable storage medium is applicable to the first-type device in the embodiments of the present disclosure, and performs the corresponding processes performed by the first-type device in the methods according to the embodiments of the present disclosure, which are not elaborated herein for brevity.

In some embodiments, the computer-readable storage medium is applicable to the second-type device in the embodiments of the present disclosure, and performs the corresponding processes performed by the second-type device in the methods according to the embodiments of the present disclosure, which are not elaborated herein for brevity.

In some embodiments, the computer-readable storage medium is applicable to the third device in the embodiments of the present disclosure, and performs the corresponding processes performed by the third device in the methods according to the embodiments of the present disclosure, which are not elaborated herein for brevity.

Some embodiments of the present disclosure further provide a computer program product including one or more computer program instructions.

In some embodiments, the computer program product is applicable to the first terminal in the embodiments of the present disclosure, and performs the corresponding processes performed by the first terminal in the methods according to the embodiments of the present disclosure, which are not elaborated herein for brevity.

In some embodiments, the computer program product is applicable to the first-type device in the embodiments of the present disclosure, and performs the corresponding processes performed by the first-type device in the methods according to the embodiments of the present disclosure, which are not elaborated herein for brevity.

In some embodiments, the computer program product is applicable to the second-type device in the embodiments of the present disclosure, and performs the corresponding processes performed by the second-type device in the methods according to the embodiments of the present disclosure, which are not elaborated herein for brevity.

In some embodiments, the computer program product is applicable to the third device in the embodiments of the present disclosure, and performs the corresponding processes performed by the third device in the methods according to the embodiments of the present disclosure, which are not elaborated herein for brevity.

Some embodiments of the present disclosure further provide a computer program.

In some embodiments, the computer program is applicable to the first terminal in the embodiments of the present disclosure, and performs the corresponding processes performed by the first terminal in the methods according to the embodiments of the present disclosure, which are not elaborated herein for brevity.

In some embodiments, the computer program is applicable to the first-type device in the embodiments of the present disclosure, and performs the corresponding processes performed by the first-type device in the methods according to the embodiments of the present disclosure, which are not elaborated herein for brevity.

In some embodiments, the computer program is applicable to the second-type device in the embodiments of the present disclosure, and performs the corresponding processes performed by the second-type device in the methods according to the embodiments of the present disclosure, which are not elaborated herein for brevity.

In some embodiments, the computer program is applicable to the third device in the embodiments of the present disclosure, and performs the corresponding processes performed by the third device in the methods according to the embodiments of the present disclosure, which are not elaborated herein for brevity.

It is to be understood by those of ordinary skill in the art that the units and algorithmic processes of the examples described in conjunction with the embodiments disclosed herein can be practiced by the electronic hardware, or by a combination of the computer software and the electronic hardware. Whether these functions are achieved by the hardware or the software depends on the specific application and design constraints of the technical solution. For each application, those skilled in the art may use different methods to achieve the described functions, and such implementations should not be considered beyond the scope of the present disclosure.

It is to be understood by those skilled in the art that for the specific operation processes of the system, device, and unit described above, reference may be made to the corresponding processes in the embodiments of the method for convenience and simplicity of description, which are not repeated herein for convenience and brevity.

In the embodiments of the present disclosure, it should be understood that the systems, devices, and methods can be practiced in other ways. For example, the apparatus embodiments are only exemplary. For example, the division of the units is only the logical function division, and the actual implementation may have another division. For example, several units or assemblies can be combined or integrated into another system, or some features can be ignored or not performed. In addition, the coupling, the direct coupling, or the communication connection between each other may be achieved by some interfaces, and an indirect coupling or communication connection between devices or units may be electrical, mechanical or in other form.

The units described as separate parts may or may not be physically separate, and the parts illustrated as the units may or may not be physical units. That is, the parts may be disposed in one place, or distributed in several network units. Some or all of the units can be selected according to actual needs to achieve the purpose of the technical solutions according to the embodiments.

In addition, the functional units in the embodiments of the present disclosure may be integrated in a processing unit or exist physically separately, or two or more units may be integrated in a unit.

In a case where the functions are achieved in the form of software functional units and sold or used as standalone products, the functions may be stored in a computer-readable storage medium. Based on the understanding, the nature of the technical solutions of the present disclosure, the part contributed to the prior art, or the part of the technical solutions may be embodied in the form of a software product, and the software product is stored in a storage medium and includes a number of instructions to cause a computer device (which may be a personal computer, a server, a network equipment, or the like) to perform all or part of the processes of the method in various embodiments of the present disclosure. The storage medium includes a U disk, a mobile hard disk, a ROM, a RAM, a disk, a disc, or other media that can store program codes.

Described above are merely specific embodiments of the present disclosure, and the scope of protection of the present disclosure is not limited. Any changes or replacements made within the technical scope of the present disclosure by those skilled in the art should be encompassed within the scope of protection of the present disclosure. thus, the scope of protection of the present disclosure shall prevail in the scope of protection of the claims.

## Claims

1. A method for wireless communication, performed by a first terminal, the method comprising:
receiving a first-type positioning reference signal (PRS) and a second-type PRS, wherein the first-type PRS is transmitted by a first-type device using an active transmission mode, the second-type PRS is transmitted by a second-type device using a backscatter mode, and the first-type PRS and the second-type PRS are used to determine position information of the first terminal.

2. The method according to claim 1, wherein the first-type device is an active transmission ambient power (AMP) device, a second terminal, or a network device, and the second-type device is a backscatter AMP device.

3. The method according to claim 1 or 2, wherein the first-type PRS is periodically transmitted, or is transmitted in response to a first trigger signal from the first terminal.

4. The method according to claim 3, wherein the first-type PRS is transmitted by the first-type device based on first configuration information, wherein the first configuration information is predefined or configured by the first terminal or a network device.

5. The method according to claim 4, wherein the first configuration information is configured by the first terminal and is carried in the first trigger signal.

6. The method according to any one of claims 1 to 5, wherein the second-type PRS is transmitted in response to a second trigger signal from the first terminal.

7. The method according to any one of claims 1 to 6, wherein the second-type PRS is transmitted by backscattering a third-type PRS.

8. The method according to claim 7, wherein the third-type PRS is transmitted by the first terminal.

9. The method according to claim 8, wherein the third-type PRS is transmitted by the first terminal based on a first timing advance.

10. The method according to claim 9, wherein
the first timing advance is configured by a network device, and is determined by the network device based on the network device and a measurement result of the first terminal; or
the first timing advance is autonomously determined by the first terminal.

11. The method according to any one of claims 7 to 10, wherein a time for receiving the first-type PRS by the first terminal is aligned with a time for receiving the second-type PRS by the first terminal.

12. The method according to claim 11, wherein the second-type PRS has a configurable or predefined frequency offset relative to the third-type PRS.

13. The method according to any one of claims 7 to 10, wherein a time for receiving the first-type PRS by the first terminal is not overlapped with a time for receiving the second-type PRS by the first terminal.

14. The method according to claim 13, wherein the second-type PRS has a configurable or predefined frequency offset relative to the third-type PRS, or the second-type PRS does not have a frequency offset relative to the third-type PRS.

15. The method according to any one of claims 7 to 10, wherein the third-type PRS is transmitted by the first-type device.

16. The method according to claim 15, wherein the third-type PRS is periodically transmitted by the first-type device, or is transmitted by the first-type device in response to a third trigger signal from the first terminal.

17. The method according to claim 15 or 16, wherein the third-type PRS has a configurable or predefined frequency offset relative to the second-type PRS.

18. A method for wireless communication, performed by a second-type device, the method comprising:
transmitting a second-type positioning reference signal (PRS) to a first terminal, wherein the second-type PRS is transmitted by the second-type device using a backscatter mode, and the second-type PRS is used to determine position information of the first terminal.

19. The method according to claim 1, wherein the second-type device is a backscatter ambient power (AMP) device.

20. The method according to claim 18 or 19, wherein the second-type PRS is transmitted in response to a second trigger signal from the first terminal.

21. The method according to any one of claims 18 to 20, wherein the second-type PRS is transmitted by backscattering a third-type PRS.

22. The method according to claim 21, wherein the third-type PRS is transmitted by the first terminal.

23. The method according to claim 22, wherein the third-type PRS is transmitted by the first terminal based on a first timing advance.

24. The method according to claim 23, wherein
the first timing advance is configured by a network device, and is determined by the network device based on the network device and a measurement result of the first terminal; or
the first timing advance is autonomously determined by the first terminal.

25. The method according to any one of claims 21 to 24, wherein a time for receiving a first-type PRS by the first terminal is aligned with a time for receiving the second-type PRS by the first terminal.

26. The method according to claim 25, wherein the second-type PRS has a configurable or predefined frequency offset relative to the third-type PRS.

27. The method according to any one of claims 21 to 24, wherein a time for receiving a first-type PRS by the first terminal is not overlapped with a time for receiving the second-type PRS by the first terminal.

28. The method according to claim 27, wherein the second-type PRS has a configurable or predefined frequency offset relative to the third-type PRS, or the second-type PRS does not have a frequency offset relative to the third-type PRS.

29. The method according to any one of claims 21 to 24, wherein the third-type PRS is transmitted by a first-type device, and the first-type device is further configured to transmit s first-type PRS to the first terminal, and the first-type PRS and the second-type PRS are used to determine position information of the first terminal.

30. The method according to claim 29, wherein the third-type PRS is periodically transmitted by the first-type device, or is transmitted by the first-type device in response to a third trigger signal from the first terminal.

31. The method according to claim 29 or 30, wherein the third-type PRS has a configurable or predefined frequency offset relative to the second-type PRS.

32. A method for wireless communication, performed by a first-type device, the method comprising:
transmitting a first-type positioning reference signal (PRS) to a first terminal, wherein the first-type PRS is transmitted by the first-type device using an active transmission mode, and the first-type PRS is used to determine position information of the first terminal.

33. The method according to claim 32, wherein the first-type device is an active transmission ambient power (AMP) device, a second terminal, or a network device.

34. The method according to claim 32 or 33, wherein the first-type PRS is periodically transmitted, or is transmitted in response to a first trigger signal from the first terminal.

35. The method according to claim 34, wherein the first-type PRS is transmitted by the first-type device based on first configuration information, wherein the first configuration information is predefined or configured by the first terminal or a network device.

36. The method according to claim 35, wherein the first configuration information is configured by the first terminal and is carried in the first trigger signal.

37. The method according to any one of claims 32 to 36, further comprising:
transmitting a third-type PRS to a second-type device, wherein the third-type PRS is used for the second-type device to acquire a second-type PRS by backscattering, and the first-type PRS and the second-type PRS are used to determine position information of the first terminal.

38. The method according to claim 37, wherein the third-type PRS is periodically transmitted by the first-type device, or is transmitted by the first-type device in response to a third trigger signal from the first terminal.

39. The method according to claim 37 or 38, wherein the third-type PRS has a configurable or predefined frequency offset relative to the second-type PRS.

40. The method according to any one of claims 37 to 39, wherein the second-type device is a backscatter ambient power (AMP) device.

41. A w method for wireless communication, performed by a third device, the method comprising:
receiving a fourth-type positioning reference signal (PRS) and a fifth-type PRS, wherein the fourth-type PRS is transmitted by a first terminal using an active transmission mode, the fifth-type PRS is transmitted by a second-type device using a backscatter mode, and the fourth-type PRS and the fifth-type PRS are used to determine position information of the first terminal.

42. The method according to claim 41, wherein the third device is a second terminal or a network device, and the second-type device is a backscatter ambient power (AMP) device.

43. The method according to claim 41 or 42, wherein the fourth-type PRS is periodically transmitted.

44. The method according to any one of claims 41 to 43, wherein the fifth-type PRS is transmitted by backscattering a sixth-type PRS from the first terminal.

45. The method according to claim 44, wherein the fifth-type PRS has a configurable or predefined frequency offset relative to the sixth-type PRS.

46. The method according to any one of claims 41 to 45, wherein the fifth-type PRS is transmitted by the second-type device in response to a fourth trigger signal from the first terminal.

47. A method for wireless communication, performed by a first terminal, the method comprising:
transmitting a fourth-type positioning reference signal (PRS) to a third device, wherein the fourth-type PRS is transmitted using an active transmission mode, and the fourth-type PRS is used to determine position information of the first terminal.

48. The method according to claim 47, wherein the third device is a second terminal or a network device.

49. The method according to claim 47 or 48, wherein the fourth-type PRS is periodically transmitted.

50. The method according to any one of claims 47 to 49, further comprising:
transmitting a sixth-type PRS to a second-type device, wherein the sixth-type PRS is used for the second-type device to acquire a fifth-type PRS by backscattering, and the fourth-type PRS and the fifth-type PRS are used to determine position information of the first terminal.

51. The method according to claim 50, wherein the fifth-type PRS has a configurable or predefined frequency offset relative to the sixth-type PRS.

52. The method according to claim 50 or 51, wherein the second-type device is a backscatter ambient power (AMP) device.

53. The method according to any one of claims 50 to 52, wherein the fifth-type PRS is transmitted by the second-type device in response to a fourth trigger signal from the first terminal.

54. A method for wireless communication, performed by a second-type device, the method comprising:
transmitting a fifth-type positioning reference signal (PRS) to a third device, wherein the fifth-type PRS is transmitted using a backscatter mode, and the fifth-type PRS is used to determine position information of a first terminal.

55. The method according to claim 54, wherein the third device is a second terminal or a network device, and the second-type device is a backscatter ambient power (AMP) device.

56. The method according to claim 54 or 55, wherein the fifth-type PRS is transmitted by backscattering a sixth-type PRS from the first terminal.

57. The method according to claim 56, wherein the fifth-type PRS has a configurable or predefined frequency offset relative to the sixth-type PRS.

58. The method according to any one of claim 54 to 57, wherein the fifth-type PRS is transmitted by the second-type device in response to a fourth trigger signal from the first terminal.

59. A communication device, comprising:
a communication unit, configured to receive a first-type positioning reference signal (PRS) and a second-type PRS, wherein the first-type PRS is transmitted by a first-type device using an active transmission mode, the second-type PRS is transmitted by a second-type device using a backscatter mode, and the first-type PRS and the second-type PRS are used to determine position information of the communication device 400.

60. A communication device, comprising:
a communication unit, configured to transmit a second-type positioning reference signal (PRS) to a first terminal, wherein the second-type PRS is transmitted by the communication device 500 using a backscatter mode, and the second-type PRS is used to determine position information of the first terminal.

61. A communication device, comprising:
a communication unit, configured to transmit a first-type positioning reference signal (PRS) to a first terminal, wherein the first-type PRS is transmitted by the communication device 600 using an active transmission mode, and the first-type PRS is used to determine position information of the first terminal.

62. A communication device, comprising:
a communication unit, configured to receive a fourth-type positioning reference signal (PRS) and a fifth-type PRS, wherein the fourth-type PRS is transmitted by a first terminal using an active transmission mode, and the fifth-type PRS is transmitted by a second-type device using a backscatter mode; and
a processing unit, configured to determine position information of the first terminal based on the fourth-type PRS and the fifth-type PRS.

63. A communication device, comprising:
a communication unit, configured to transmit a fourth-type positioning reference signal (PRS) to a third device, wherein the fourth-type PRS is transmitted using an active transmission mode, and the fourth-type PRS is used to determine position information of the communication device 800.

64. A communication device, comprising:
a communication unit, configured to transmit a fifth-type positioning reference signal (PRS) to a third device, wherein the fifth-type PRS is transmitted using a backscatter mode, and the fifth-type PRS is used to determine position information of a first terminal.

65. A communication device, comprising: a processor and a memory, wherein the memory is configured to store one or more computer programs, and the processor is configured to call and run the one or more computer programs in the memory to cause the communication device to perform the method as defined in any one of claims 1 to 17, the method as defined in any one of claims 18 to 31, the method as defined in any one of claims 32 to 40, the method as defined in any one of claims 41 to 46, the method as defined in any one of claims 47 to 53, or the method as defined in any one of claims 54 to 58.

66. A chip, comprising: a processor, wherein the processor is configured to call and run one or more computer programs in a memory to cause a device equipped with the chip to perform the method as defined in any one of claims 1 to 17, the method as defined in any one of claims 18 to 31, the method as defined in any one of claims 32 to 40, the method as defined in any one of claims 41 to 46, the method as defined in any one of claims 47 to 53, or the method as defined in any one of claims 54 to 58.

67. A computer-readable storage medium, storing: one or more computer programs, wherein the one or more computer programs, when loaded and run on a computer, cause the computer to perform the method as defined in any one of claims 1 to 17, the method as defined in any one of claims 18 to 31, the method as defined in any one of claims 32 to 40, the method as defined in any one of claims 41 to 46, the method as defined in any one of claims 47 to 53, or the method as defined in any one of claims 54 to 58.

68. A computer program product, comprising: one or more computer program instructions, wherein the one or more computer program instructions, when loaded and executed on a computer, cause the computer to perform as defined in any one of claims 1 to 17, the method as defined in any one of claims 18 to 31, the method as defined in any one of claims 32 to 40, the method as defined in any one of claims 41 to 46, the method as defined in any one of claims 47 to 53, or the method as defined in any one of claims 54 to 58.

69. A computer program, wherein the computer program, when loaded and run on a computer, causes the computer to perform the method as defined in any one of claims 1 to 17, the method as defined in any one of claims 18 to 31, the method as defined in any one of claims 32 to 40, the method as defined in any one of claims 41 to 46, the method as defined in any one of claims 47 to 53, or the method as defined in any one of claims 54 to 58.
